# EUROPÄISCHE PATENTSCHRIFT

(11) **EP 2 696 007 B1**
(45) Veröffentlichungstag und Bekanntmachung des Hinweises auf die Patenterteilung: **28.06.2017**
(21) Anmeldenummer: 13179887.8
(22) Anmeldetag: 09.08.2013
(51) Int. Cl.: E04D 13/08

(54) **Regenwasserfänger und Regenwasser-Fangsystem**
Rain water collector and rain water collection system
Collecteur d'eau de pluie et système de collecte d'eau de pluie

(30) Priorität: 10.08.2012 DE 202012007710 U
(43) Veröffentlichungstag der Anmeldung: 12.02.2014
(73) Patentinhaber: Otto Graf GmbH Kunststofferzeugnisse, 79331 Teningen (DE)
(72) Erfinder: Graf, Otto P., 79331 Teningen (DE)
(74) Vertreter: Grünecker Patent- und Rechtsanwälte PartG mbB

(56) Entgegenhaltungen:
- EP-A1- 2 400 065
- DE-U1- 20 114 247
- FR-A1- 2 958 671
- US-A- 5 490 538

## Beschreibung

Die Erfindung betrifft ein Regenwasser-Fangsystem gemäß Oberbegriff des Anspruchs 1.

Bei einem aus EP 2 400 065 A1 bekannten Regenwasser-Fangsystem erstreckt sich der am Rohrgehäuse angeordnete Ablaufstutzen koaxial zur Ablauföffnung der Fangschaufel. Im montiertem Zustand des Regenwasserfängers ist das Rohrgehäuse über eine Drehkupplung gegen Verdrehen an einer den Regenwasserfänger in der Einsetzbohrung des Fallrohres verklemmenden Hülse abgestützt, und ist diese Hülse ebenfalls gegen Verdrehen in dem sich am Fallrohr abstützenden Stützkörper gesichert. Durch die Drehsicherungen wird sichergestellt, dass das Filter- und Dosiergehäuse stets mit obenliegendem Deckel positioniert bleibt.

In einem aus US 5 490 538 A bekannten Regenwasser-Fangsystem ist die am Rohrgehäuse angeformte Fangschaufel des Regenwasserfängers so ausgebildet, dass sie sich zusammendrücken und durch die Einsetzbohrung in das Innere des Fallrohres einführen lässt, und sobald eingeführt sich so weit rückstellend verbreitert, dass sie einen Großteil des Innenquerschnitts des Fallrohres beansprucht. Das Befestigungssystem umfasst einen C-förmigen Sattel, der um die Außenseite des Fallrohres spannbar ist und den Regenwasserfänger festlegt. Im Sattel ist ein Rohrstutzen eingeformt, der mit einer Endschulter in die Einsetzbohrung eingreift. In den Rohrstutzen wird das Rohrgehäuse eingesteckt und über Nuten und Vorsprünge drehfest in einer Position im Sattel verriegelt, in der der Rohrstutzen des Rohrgehäuses vertikal nach unten weist.

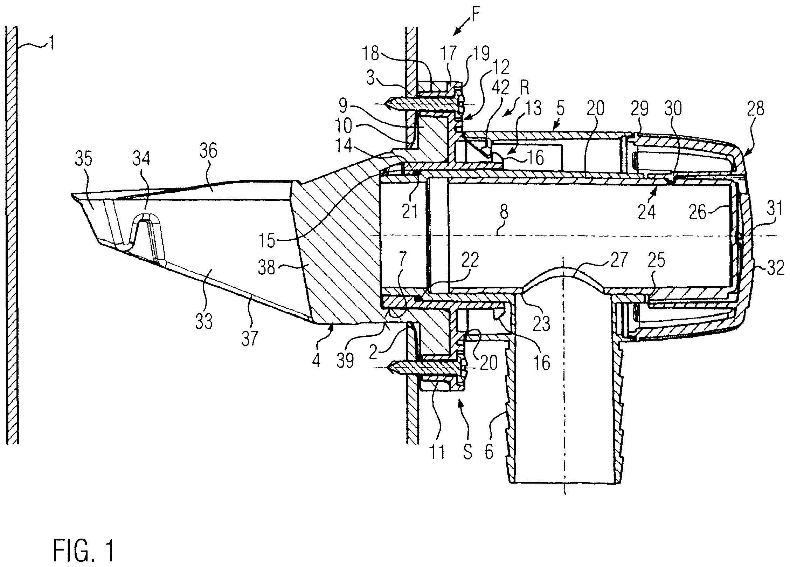

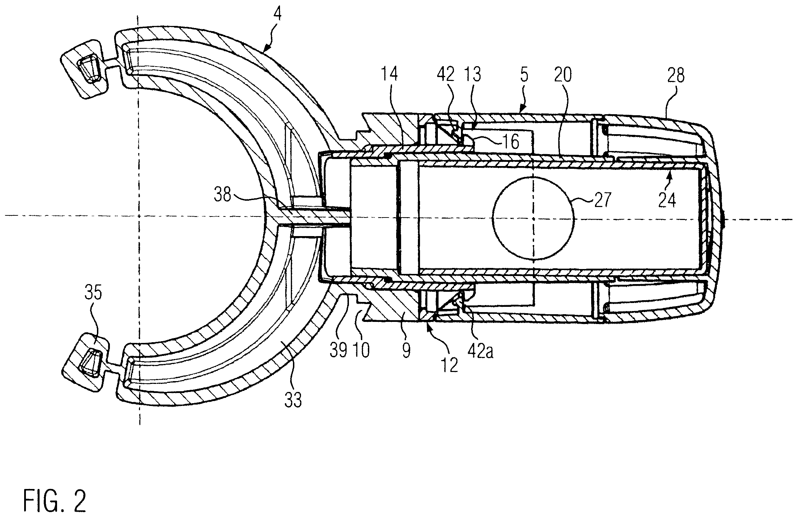

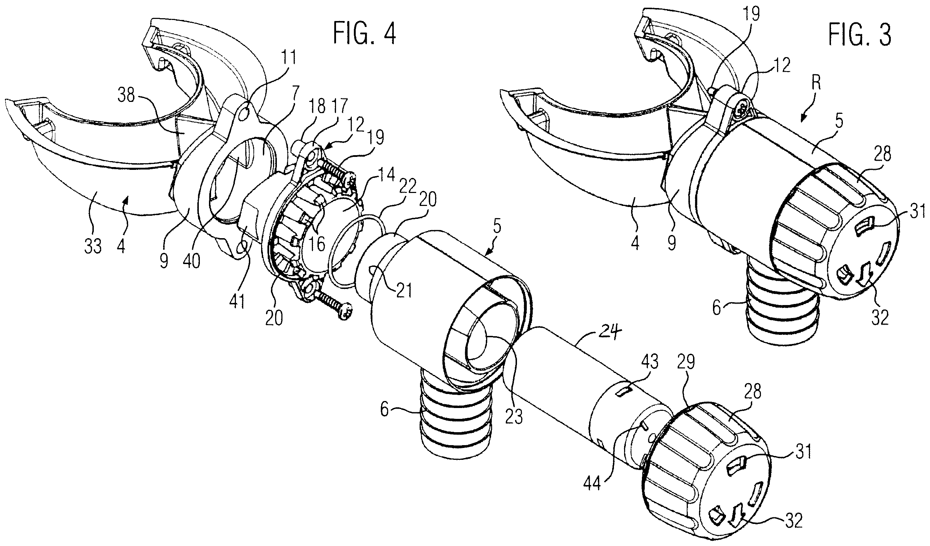

Aus GB 2 248 262 A ist ein Regenwasser-Fangsystem bekannt, bei dem in einer Ausführungsform (Fig. 3, 4) die Fangschaufel fest mit dem Rohrgehäuse verbunden ist und sich zusammen mit dem Rohrgehäuse im Fallrohr um die Achse der Einsetzbohrung verdrehen lässt, um die Fangkapazität der Fangschaufel zu variieren oder diese in eine Neutralstellung zu bringen. In einer anderen Ausführung (Fig. 1, 2) wird die Fangschaufel aus einem ebenen Zuschnitt gebogen, mit einem Quersteg um das Rohrgehäuse gewickelt, mit einer Schelle festgespannt und reibschlüssig in die Einsetzbohrung so eingesteckt, dass sich die Fangschaufel mit dem Rohrgehäuse im Fallrohr verdrehen lässt. Das Rohrgehäuse hat nur einen axialen Auslass zum Anschließen eines Verbindungsschlauches.

Weiterer Stand der Technik ist zu finden in DE 201 14 247 U1 und FR 2 958 671 A1.

Die Akzeptanz solcher Regenwasser-Fangsysteme zur Regenwassernutzung aus einem Sammelbehälter nimmt speziell in regenreichen Ländern stark zu, vor allem aufgrund gesteigerten Umweltbewusstseins und wegen hoher Kosten für Trinkwasser und Abwasser. Gerade in dicht besiedelten Gebieten mit kleinen Grundstücken und/oder dekorativ gestalteten Gärten oder Höfen stört jedoch ein aus dem Regenwasserfänger gespeister Sammelbehälter, wenn er exponiert und frei aufgestellt ist, z.B. im Abstand vor dem Fallrohr, um am Regenwasserfänger mit am Rohrgehäuse und dessen Ablaufstutzen im Wesentlichen horizontal beginnendem Verbindungsschlauch diesen mit möglichst wenigen Umlenkungen zu installieren. Es gibt deshalb Bedarf, den Sammelbehälter möglichst an der das Fallrohr aufweisenden Gebäudewand aufzustellen, z.B. seitlich neben oder vor dem Fallrohr, und einen ausladenden Verlauf des Verbindungsschlauches zu vermeiden. Es gibt sogar dekorativ gestaltete Sammelbehälter, deren technischer Zweck durch ein Dekor kaschiert wird und die sich eng an eine Gebäudewand anschmiegen und, den Platzverhältnissen Rechnung tragend, an der einen oder anderen Seite des Fallrohres oder direkt daran angrenzend aufgestellt werden. Mit Regenwasserfängern mit im Wesentlichen horizontal beginnendem Verbindungsschlauch muss dieser dann mehrfach umgelenkt oder weit ausladend installiert werden, was optisch stört. Dazu kommt, dass bisher bekannte Regenwasserfänger überwiegend von Benutzern selbst installiert werden (Heimwerker; DIY-MARKET), die mit der zum Teil komplizierten Handhabung beim Zusammenbau, der Installation und der Wartung überfordert sind, so dass zur weiteren Akzeptanzsteigerung ein komfortabel und einfach handhabbarer Regenwasserfänger gebraucht wird.

Der Erfindung liegt die Aufgabe zugrunde, ein Regenwasser-Fangsystem zu schaffen, das mit kurzem, flexiblem Verbindungsschlauch universell verschiedene optimale Aufstellpositionen des Sammelbehälters zulässt, komfortabel zusammenzubauen und zu installieren und zu warten ist.

Die gestellte Aufgabe wird mit dem Regenwasser-Fangsystem gemäß Anspruch 1 gelöst.

Da in montiertem Zustand das Rohrgehäuse des Regenwasserfängers des Regenwasser-Fangsystems mit dem im Wesentlichen quer zur Achse der Ablauföffnung orientierten Ablaufstutzen relativ zur Fangschaufel verdrehbar ist, lässt sich, auch nachträglich, jede gewünschte Drehposition einstellen, in der der Verbindungsschlauch ohne auszuladen und ohne störende Umlenkungen direkt auch zum an der Gebäudewand aufgestellten Sammelbehälter führbar ist. Der Regenwasserfänger ist bequem auch von Heimwerkern zusammensetzbar und installierbar, wobei die Fangschaufel in einer einzigen, optimalen Fangposition im Fallrohr sicher festgelegt und mit dem Rohrgehäuse verbunden wird, das sich nach Bedarf in die jeweils gewünschte Drehposition einstellen lässt. Das Regenwasser-Fangsystem enthält die vom Rohrgehäuse baulich getrennte, in der Fangposition formschlüssig am Fallrohr festgelegte Fangschaufel, die einfach zu montieren ist und in ihrem Design auf runde oder Vierkantfallrohre abgestimmt sein kann. Beide Fangschaufel-Typen können im Lieferumfang enthalten sein und wahlweise eingesetzt werden. Das Rohrgehäuse ist indirekt so mit der Fangschaufel verbunden, dass es sich mit seinem Ablaufstutzen in jede beliebige Position drehen lässt, um den Verbindungsschlauch zum Sammelbehälter ideal zu verlegen und den Sammelbehälter z.B. direkt an der Gebäudewand oder in einer Nische platzieren zu können. Muss aus dekorativen oder baulichen Gründen der Sammelbehälter umgestellt werden, lässt sich das Rohrgehäuse auch nachträglich in die dann erneut optimale Position drehen.

Bei einer zweckmäßigen Ausführungsform lässt sich das Rohrgehäuse um mindestens etwa 180° z.B. von horizontal links nach horizontal rechts verdrehen, beispielsweise so, dass der Ablaufstutzen entweder im Wesentlichen horizontal nach links oder nach rechts oder nach unten weist. Zweckmäßig ist das Rohrgehäuse sogar um 360° verdrehbar, um jegliche erforderliche Position des Ablaufstutzens frei wählen zu können.

Dasselbe Rohrgehäuse kann wahlweise mit einer runden Fangschaufel für runde Fallrohre oder einer viereckigen Fangschaufel für Vierkantfallrohre kombiniert werden, was den Einsatzbereich des Regenwasserfängers erheblich erweitert.

Die Montage des Regenwasserfängers lässt sich auch von ungeübten Heimwerkern komfortabel vornehmen, wenn das Rohrgehäuse indirekt mit der Fangschaufel über eine gesteckte Rastverbindung mit im Wesentlichen in Richtung der Achse der Ablauföffnung orientierter Steckrichtung verbunden ist. Das Rohrgehäuse wird, zweckmäßig, mit der jeweiligen Fangschaufel über einen Rohradapter des Befestigungssystems verbunden, der mit der Fangschaufel, vorzugsweise auch dem Fallrohr, verdrehfest verbindbar ist, und eine umfängliche Rastzahnanordnung für wenigstens Gegenraste aufweist. Die Rastverbindung ist ergonomisch günstig in Achsrichtung zusammenfügbar.

Die Rastverbindung kann durch ein innen eingestecktes Innenrohr des Rohrgehäuses zusätzlich stabilisiert sein. Das Innenrohr wird vorzugsweise abgedichtet, und bildet über eine seitliche Dosieröffnung im Rohrgehäuse einen Strömungsweg in den Ablaufstutzen.

Dabei ist zweckmäßig zwischen der Fangschaufel und dem Rohrgehäuse ein Rohradapter vorgesehen, der in einem Montierflansch einen in die Ablauföffnung und zum Rohrgehäuse passenden Rohrabschnitt aufweist und über den Montierflansch gegen einen an der Fangschaufel angeformten Außenflansch spannbar ist. Zweckmäßig wird hierfür wenigstens ein durch den Außenflansch in das Fallrohr einbringbares Befestigungselement verwendet. Über das Befestigungselement wird der Montierflansch des Rohradapters so gegen den elastischen Außenflansch der Fangschaufel gepresst, dass sich der Außenflansch unter Nutzen seiner Elastizität abdichtend an die Außenseite des Fallrohres anlegt (z.B. DN70...DN110-Fallrohre und rechteckige oder quadratische Fallrohren wie z.B. 2x3") Dabei kann der Montierflansch bei bereits zusammengebautem Regenwasserfänger oder vor dessen Zusammenbau am Fallrohr festgelegt werden, was für den Heimwerker eine einfache und komfortable Handhabung ist.

Beispielsweise umfasst das Befestigungselement zwei relativ zur Achse der Ablauföffnung im Wesentlichen diametral gegenüberliegende Spannschrauben, die, vorzugsweise, in den Außenflansch eindringenden Rohrfassungen des Montierflansches sitzen, so dass sich durch die Spannschrauben ausreichend hohe Spannkräfte erzeugen lassen und diese im montierten Zustand auch abgedichtet sind.

Bei einer zweckmäßigen Ausführungsform, z.B. für runde Fallrohre, weist der Außenflansch der Fangschaufel eine konkav gerundete Fallrohrseite auf, die sich an die Außenkontur des Fallrohres leicht anzupassen und anzulegen vermag, und bei der Montage automatisch die richtige optimale Fangposition der Fangschaufel im Fallrohr sicherstellt. Der Außenflansch kann über einen in die Einsetzbohrung des Fallrohres passenden Halsbereich und, zur Erhöhung der Stabilität, vorzugsweise einen Vertikalsteg, mit zwei Bogenzinken oder einem Viereckrahmen der Fangschaufel verbunden sein. Die beiden Bogenzinken oder der Viereckrahmen der Fangschaufel nehmen bzw. nimmt nur einen Teilbereich des Innenquerschnitts des jeweiligen Fallrohres ein, so dass mit Regenwasser anfallende Verunreinigungen oder Laub oder Äste über die Fangschaufel hinweg durch das Fallrohr ausgespült werden.

Herstellungsgünstig ist die Gegenraste des Rohrgehäuses von inneren, mehreren, z.B. drei regelmäßig mit freien Zwischenrahmen verteilten, nur teilumfänglichen Rastnasen, jeweils mit einem Sägezahnprofil gebildet. Diese Gegenraste wird beim Herstellen der Rastverbindung über die Rastzahnanordnung des Rohradapters geschoben und dahinter eingerastet, so dass das Rohrgehäuse haltbar mit der fest montierten Fangschaufel verbunden ist, und sich dennoch verdrehen lässt und in der jeweils eingestellten Drehposition gehalten wird. Jede Rastnase kann z.B. gleichzeitig mindestens zwei Rastzähne der Rastzahnanordnung übergreifen.

Um eine Fehlausrichtung des Rohrgehäuses gegenüber der Fangschaufel zu vermeiden, ist zweckmäßig am Montierflansch des Rohradapters eine Stützschulter für ein Rohrgehäuseende vorgesehen.

Um trotz der unveränderlichen Fangposition der Fangschaufel die Wasserausbeute nach Bedarf variieren zu können, oder, z.B. im Winter, überhaupt kein Wasser abzuzweigen, ist bei einer zweckmäßigen Ausführungsform im Innenrohr ein Dosiertopf mit einer seitlichen, auf die Dosieröffnung des Rohrgehäuses ausgerichteten Wandöffnung verdrehbar angeordnet. Die Dosieröffnung und die Wandöffnung arbeiten blendenartig miteinander zusammen, um den Ablaufquerschnitt nach Bedarf einstellen oder vollständig absperren zu können, indem der Dosiertopf entsprechend verdreht wird.

Bei einer zweckmäßigen Ausführungsform steht der Dosiertopf mit seinem Bodenende aus dem Innenrohr des Rohrgehäuses vor. In diesem Überstandsbereich ist ein verdrehfest aufgeklipster oder verdrehfest mit dem Dosiertopf verbundener Drehknopf vorgesehen, der eine bequeme Handhabung bei der Dosierungseinstellung ermöglicht.

Zweckmäßig weist der Drehknopf eine außenseitige Markierung, vorzugsweise einen Richtungspfeil, auf, die die Position der Wandöffnung im Dosiertopf repräsentiert, so dass jederzeit ersichtlich ist, ob der maximale Abflussquerschnitt eingestellt ist, und zwar unabhängig von der Drehposition des Rohrgehäuses, oder wie der Drehknopf zu verdrehen ist, um abzudrosseln oder voll abzusperren.

Zweckmäßig besteht die Fangschaufel aus weichelastischem Kunststoff, wie z.B. Silikon, und bestehen die weiteren Komponenten des Regenwasserfängers aus Hartkunststoff. Alle Teile des Regenwasserfängers können Spritzgussteile sein, wobei das Konzept der Struktur und der Rastverbindung so ausgelegt ist, dass es sich um einfach und kostengünstig herstellbare Spritzgussteile handeln kann.

Anhand der Zeichnungen werden Ausführungsformen des Erfindungsgegenstandes erläutert. Es zeigen:
- Fig. 1: einen Vertikalschnitt eines Regenwasser-Fangsystems mit an einem runden Fallrohr installiertem Regenwasserfänger mit vertikal nach unten orientiertem Ablaufstutzen zum Anschließen eines Verbindungsschlauches zu einem nicht gezeigten Sammelbehälter,
- Fig. 2: einen Horizontalschnitt des Regenwasserfängers in der in Fig. 1 gezeigten Einstellung,
- Fig. 3: eine Perspektivdarstellung des Regenwasserfängers der Fig. 1 und 2,
- Fig. 4: eine perspektivische Explosionsdarstellung des Regenwasserfängers mit seinen Komponenten, und
- Fig. 5: eine Darstellung entsprechend Fig. 3 in einer Ausstattung für ein Vierkant-Fallrohr.

Fig. 1 verdeutlicht ein Regenwasser-Fangsystem F zum Abzweigen von Regenwasser aus einem Fallrohr 1 (mit rundem, ovalem, oder viereckigem Querschnitt) und zum Speisen eines nicht gezeigten Sammelbehälters mit abgezweigtem Regenwasser.

Das Fallrohr 1 weist eine seitliche Einsetzbohrung 2 auf, sowie beispielsweise oberhalb und unterhalb der Einsetzbohrung 2 gebohrte Öffnungen 3 zum Festlegen eines Regenwasserfängers R am Fallrohr 1.

Der Regenwasserfänger R weist eine z.B. in ihrer Form auf das jeweilige Fallrohr 1 abgestimmte Fangschaufel 4 aus elastisch rückstellendem Material, beispielsweise einem Elastomer, wie Silikon, auf, deren Hauptteil im Inneren des Fallrohres 1 platziert ist, und die außerhalb des Fallrohres 1 indirekt mit einem Rohrgehäuse 5 verbunden ist. Die Fangschaufel 4 weist eine Ablauföffnung 7 auf, deren Achse mit 8 bezeichnet ist, die beispielsweise in etwa horizontal (oder mit Gefälle) verläuft. Das Rohrgehäuse 5 weist einen eingeformten Rohrstutzen 6 zum Anschließen eines Verbindungsschlauches zum Sammelbehälter (nicht gezeigt) auf, der sich quer zur Achse 8 erstreckt, zweckmäßig senkrecht zu dieser orientiert ist. Der Rohrstutzen 6 könnte direkt in den Sammelbehälter eingeführt oder (ohne Verbindungsschlauch) auf dessen Öffnung ausgerichtet werden.

Die Fangschaufel 4 hat einen an der Außenseite des Fallrohres anliegenden Außenflansch 9, der, beispielsweise für ein Fallrohr mit rundem Querschnitt, gegebenenfalls eine konkave Zylinderkrümmung an einer Fallrohrseite 10 aufweist (Fig. 1), mit der er am Fallrohr 1 anliegt. Für rechteckige bzw. quadratische Fallrohre 1 ist die Fallrohrseite 10 des Außenflansches 9 eben. Im Außenflansch 9 sind bei der gezeigten Ausführungsform (Option) zwei sich in Bezug auf die Achse im Wesentlichen diametral gegenüberliegende Öffnungen 11 geformt, in die Rohrfassungen 18 eines Rohradapters 12 eingesteckt sind. In den Rohrfassungen 18 sitzen Befestigungselemente 19, zweckmäßig Spannschrauben, die in die Öffnungen 3 im Fallrohr 1 eingeschraubt sind und den Außenflansch 9 gegen das Fallrohr spannen, und zwar in einer vorbestimmten Fangposition der Fangschaufel, in der diese im Wesentlichen horizontal im Inneren des Fallrohres 1 platziert ist.

Der Rohradapter 12 weist einen Montierflansch 17 auf, vorzugsweise zwei ohrenartige Böcke (Fig. 4), enthält an der dem Außenflansch 9 abgewandten Seite eine umlaufende Schulter 20 und innen einen Rohrabschnitt 14, der in Richtung der Achse 8 zu beiden Seiten des Montierflansches 17 vorsteht. In dem Rohrabschnitt 14 kann eine in Umfangsrichtung umlaufende Innenschulter 15 geformt sein. Außen ist am Rohrabschnitt 14 an der dem Außenflansch 9 abgewandten Endseite eine umfängliche Rastzahnanordnung 16 (Fig. 4) vorgesehen, die zum Zusammenwirken mit wenigstens einer Gegenraste 42 des Rohrgehäuses 5 dient. Diese Gegenraste 42 besteht z.B. aus mehreren Rastnasen 42a mit einem Sägezahnprofil, die auf dem Innendurchmesser des Rohrgehäuses 5 gegebenenfalls sogar im Wesentlichen regelmäßig verteilt sind, um zwischen dem Rohradapter 12 und dem Rohrgehäuse 5 eine in Richtung der Achse 8 steckbare Rastverbindung 13 herzustellen, durch welche das Rohrgehäuse 5 indirekt mit der Fangschaufel 4 verbunden ist, wobei das Rohrgehäuse 5 in der Rastverbindung 13 relativ zum Rohradapter 12 und zur Fangschaufel 4 verdrehbar bleibt.

Das Rohrgehäuse 5 ist zweckmäßig um mindestens 180° relativ zur Fangschaufel 4 verdrehbar, beispielsweise so, dass sich die Position des Rohrstutzens 6 so verändern lässt, dass er entweder zu einer Seite im Wesentlichen horizontal orientiert ist, oder in beliebigen Zwischenstellungen, einschließlich der gezeigten vertikalen Stellung, steht. Vorzugsweise lässt sich das Rohrgehäuse 5 sogar über 360° relativ zur Fangschaufel 4 verdrehen, um beliebige Drehpositionen des Rohrstutzens 6 einstellen zu können.

Die Rastverbindung 13 kann (optimal) in eingerastetem Zustand von innen her durch ein in das Rohrgehäuse 5 eingeformtes Innenrohr 20 stabilisiert sein, das bis unter den Rohrabschnitt 14 greift und eine umfängliche Außenschulter 21 aufweisen kann, die mit der Innenschulter 15 des Rohrabschnitts 14 zusammenwirkt, um einen Dichtring 22, z.B. einen O-Ring, in einer Dichtposition zu verspannen. Der Dichtring 22 dient auch als Drehhemmung (Sicherung der eingestellten Drehposition) bei Verdrehen des Rohrgehäuses. Der Rohrstutzen 6 mündet im Innenrohr 20 mit einer Ablauföffnung 23.

Zweckmäßig ist im Innenrohr 20 ein Dosiertopf 24 mit einem einseitig verschlossenen Bodenende 26 um die Achse 8 verdrehbar angeordnet, der eine seitliche Wandöffnung 27 besitzt, die auf die Ablauföffnung 23 ausgerichtet ist, und mit dieser blendenartig zusammenwirkt, um je nach gewählter Drehposition des Dosiertopfes 24 eine maximale oder gedrosselte Ausbeute oder keine Ausbeute einstellen zu können.

Der Dosiertopf 24 steht an der dem Außenflansch abgewandten Seite mit dem Bodenende 26 aus dem Innenrohr 20 vor und trägt einen beispielsweise aufgeklipsten Drehknopf 28, der mit Verrastungen 30, 31 drehfest und/oder abziehfest mit dem Dosiertopf 24 verbunden ist. Die Verrastung 30 dient auch dazu, über den Drehknopf 28 den Dosiertopf 24 aus dem Innenrohr 20 herausziehen zu können, und beispielsweise den Regenwasserfänger R mittels eines Schlauches zu reinigen. Ein Ende 29 des Drehknopfes 28 greift z.B. unter ein Ende des Rohrgehäuses 5. An der Stirnseite des Drehknopfes 28 kann eine Markierung 32 vorgesehen sein, beispielsweise ein Richtungspfeil (Fig. 4), der die Position der Wandöffnung 27 repräsentiert.

Die Fangschaufel 4 (Fig. 1 und Fig. 2) weist bei der gezeigten Ausführungsform zwei für runde Fallrohre 1 Bogenzinken 33 auf, die über einen in die Einsetzbohrung 2 passenden Halsbereich 39 sowie über wenigstens einen Vertikalsteg 38 mit dem Außenflansch 9 verbunden sind. Die Gabelzinken 33 sind an ihren Oberseiten 36 offen und unterseitig durch einen Boden 37 begrenzt. Über eine Einkerbung 34 ist ein Endabschnitt 35 jedes Gabeizinkens 33 bei Bedarf abtrennbar, um die Fangkapazität der Fangschaufel 4 bei Bedarf verringern und/oder sie an den Fallrohr-Durchmesser anpassen zu können.

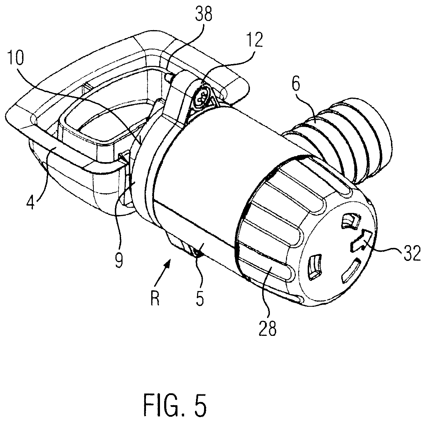

Fig. 2 zeigt auch die konkave Fallrohrseite 10 des Außenflansches 9, mit der die richtige Fangposition der Fangschaufel 4 im runden Fallrohr 1 bestimmt und eine wirksame Abdichtung erzeugt wird. Ist ein rechteckiges oder quadratisches Fallrohr 1 vorhanden, kommt z.B. eine viereckige oder rechteckige Fangschaufel 4 (Fig. 5) zum Einsatz, deren Fallrohrseite 10 eben sein kann. Die Fallrohrseite 10 braucht nicht notwendigerweise an das jeweils vorliegende runde Fallrohr 1 angepasst zu sein, da die Elastizität des Materials der Fangschaufel 4 ohnedies für eine einwandfreie Anpassung und Abdichtung sorgt.

Fig. 3 verdeutlicht den zusammengebauten Regenwasserfänger R für runde Fallrohre 1 in der in den Fig. 1 und 2 gezeigten Position mit vertikal nach unten orientiertem Rohrstutzen 6 und einer Einstellung des Drehknopfes 28 für maximale Ausbeute (Richtungspfeil 32 weist nach unten). Das Rohrgehäuse 5 lässt sich relativ zum Rohradapter 12 und der Fangschaufel 4 um die Achse 8 verdrehen, um andere Orientierungen des Rohrstutzens 6 einstellen zu können, wobei der Dosiertopf 24 und der Drehknopf 28 die jeweilige Verdrehung mitmachen, so dass sich die eingestellte Ausbeute durch Verdrehen des Rohrgehäuses 5 nicht verändert.

Fig. 4 verdeutlicht die Einzelteile des Regenwasserfängers R der Fig. 1 bis 3, wobei die Fangschaufel 4 (hier für runde Fallrohre 1) mit ihrem Außenflansch 9 aus einem elastisch rückstellfähigen Material, wie einem Silikon, als Spritzgussteil hergestellt sein kann, während die anderen Komponenten 12, 5, 24, 28 Spritzgussteile aus Hartkunststoff sein können. Der Dichtring 22 kann ein handelsüblicher O-Ring sein. Die Spannschrauben 19 können selbstschneidende Blechschrauben sein. Zur drehfesten und abziehfesten Verriegelung des Drehknopfes 28 mit dem überstehenden Ende des Dosiertopfes 24 sind in diesen Rastvertiefungen 44, 43 eingeformt, die mit den Verrastungen 30, 31 des Drehknopfes 28 in Fig. 1 zusammenwirken.

In den gezeigten Ausführungsformen umfasst die Rastzahnanordnung 16 eine Vielzahl in regelmäßigen Abständen entlang des Umfangs des Rohrabschnitts 14 verteilter Rastzähne. Die z.B. drei Rastnasen 42a im Rohrgehäuse 5 können um 120° oder andere entformtechnisch bedingte Winkel zueinander versetzt, und z.B. so breit sein, dass jede mindestens zwei Rastzähne gleichzeitig übergreift.

Fig. 5 zeigt den Regenwasserfänger R in einer Ausstattung für Vierkant-Fallrohre 1, d.h. mit einem anderen Fangschaufel-Typ, der auf den Fallrohr-Vierkant-Querschnitt abgestimmt ist und beispielsweise einen mittig offenen Vierkant-Fangrahmen aufweist und dessen Fallrohrseite 10 am Außenflansch 9 eben ist. Die weiteren Komponenten entsprechen den bereits erläuterten. Das Rohrgehäuse 5 ist relativ zur Fangschaufel 4 um 90° gegen den Uhrzeigersinn verdreht, so dass der Rohrstutzen 6 (wie der Richtungspfeil 32) in etwa horizontal nach rechts weist.

Der Regenwasserfänger R weist hohen Montage- und Bedienkomfort auf, sowie die 360°-Drehfunktion. Mit diesen Merkmalen ist er zum Füllen oberirdischer Sammelbehälter universell einsetzbar, da er durch einen sozusagen integrierten Bewegungsregler in jede passende Orientierung des Rohrstutzens 6 einstellbar ist und auch die hintersten Sammelbehälter nahe an oder direkt an der Gebäudewand in jedem Garten oder Hof optimal gespeist werden können. Die Installation und die Montage sind einfach. Es ist kein Durchtrennen des Fallrohres notwendig, um den Regenwasserfänger R zu montieren. Ein mitgelieferter Spezialbohrer (nicht gezeigt) ermöglicht, die Einsetzbohrung und die Öffnungen 2, 3 im Fallrohr nach Bedarf zu setzen. Die Fangschaufel 4 aus dem elastischen Material wird dann von Hand zusammengedrückt und durch die Einsetzbohrung 2 (z.B. sehr leicht mit Hilfe von Schmierseife) eingeführt, wonach sie sich zurückstellt und in der Fangposition im Fallrohr positioniert ist, um Regenwasser aufzufangen und durch die Ablauföffnung 7 abzuleiten. Größere Verschmutzungen, wie z.B. Laub, fallen an den Gabelzinken 33 vorbei und werden im Fallrohr 1 weggespült. Eine Reinigung des Regenwasserfängers ist komfortabel durchzuführen. Es braucht nur der Dosiertopf 24 herausgezogen zu werden, um dann mit einem Gartenschlauch den Regenwasserfänger R durchzuspülen. Der Regenwasserfänger R bietet zudem den Vorteil einer integrierten Überlaufstoppfunktion. Steigt nämlich das abgezweigte Wasser durch den Rohrstutzen 6 nach oben, wird über die Fangschaufel 4 kein weiteres Wasser mehr abgezweigt. Dadurch besteht die Möglichkeit, den Regenwasserfänger R auch als Regenklappe einzusetzen. Im Winter lässt sich durch Verdrehen des Dosiertopfes 24 bis in eine Absperrstellung die Entnahme von Regenwasser sperren. Dem Einfrieren des Sammelbehälters wird so vorgebeugt. Gegebenenfalls wird der Regenwasserfänger R an Benutzer mit beiden Fangschaufel-Typen abgegeben, was seinen universellen Einsatzbereich erweitert.

## Patentansprüche

1. Regenwasser-Fangsystem (F), bestehend aus einem eine seitliche Einsetzbohrung (2) aufweisenden Fallrohr (1) und einem in der Einsetzbohrung (2) mit einem Befestigungssystem (S) montierten Regenwasserfänger (R), der eine innen im Fallrohr (1) in einer im Wesentlichen horizontalen Fangposition platzierte und einen Teil des Fallrohr-Innenquerschnitts beanspruchende Fangschaufel (4) aus zum Einsetzen durch die Einsetzbohrung (2) elastisch rückstellend verformbarem Material mit einer Ablauföffnung (7) und ein die Ablauföffnung (7) verlängerndes, von der Fangschaufel (4) baulich getrenntes Rohrgehäuse (5) mit einem Ablaufstutzen (6) außerhalb des Fallrohres (1) aufweist, wobei das Rohrgehäuse (5) über die Fangschaufel (4) am Fallrohr (1) befestigt ist, **dadurch gekennzeichnet, dass** der Ablaufstutzen (6) quer zur Ablauföffnung (7) am Rohrgehäuse (5) orientiert ist, und dass das Rohrgehäuse (5) in montiertem Zustand des Regenwasserfängers (R) mit dem Ablaufstutzen (6) im Wesentlichen um die Achse (8) der Ablauföffnung (7) relativ zur Fangschaufel (4) verdrehbar ist.

2. Regenwasser-Fangsystem nach Anspruch 1, **dadurch gekennzeichnet, dass** das Rohrgehäuse (5) um mindestens etwa 180°, vorzugsweise 360°, verdrehbar ist..

3. Regenwasser-Fangsystem nach Anspruch 1, **dadurch gekennzeichnet, dass** das Rohrgehäuse (5) wahlweise mit einer Fangschaufel (4) für runde Fallrohre (1) mit zwei bogenförmigen Gabelzinken (33) oder mit einer angenähert viereckigen Fangschaufel (4) für Vierkant-Fallrohre (1) kombinierbar ist.

4. Regenwasser-Fangsystem nach Anspruch 1, **dadurch gekennzeichnet, dass** das Rohrgehäuse (5) mit der Fangschaufel (4) über eine gesteckte Rastverbindung (13) mit im Wesentlichen in Richtung der Achse (8) orientierter Steckrichtung verbunden ist, vorzugsweise, über einen Rohradapter (12) des Befestigungssystems (S), der mit der Fangschaufel (4), vorzugsweise auch dem Fallrohr (1), verdrehfest verbindbar ist und eine umfängliche Rastzahnanordnung (16) für wenigstens eine zumindest teilumfängliche Gegenraste (42) des Rohrgehäuses (5) aufweist.

5. Regenwasser-Fangsystem nach Anspruch 4, **dadurch gekennzeichnet, dass** die Rastverbindung (13) durch ein innen eingestecktes, vorzugsweise abgedichtetes und mit dem Ablaufstutzen (6) über eine seitliche Dosieröffnung (23) kommunizierendes, Innenrohr (20) des Rohrgehäuses (5) zusätzlich stabilisiert ist.

6. Regenwasser-Fangsystem nach wenigstens einem der vorhergehenden Ansprüche, **dadurch gekennzeichnet, dass** zwischen der Fangschaufel (4) und dem Rohrgehäuse (5) ein Rohradapter (12) vorgesehen ist, der in einem Montierflansch (17) einen in die Ablauföffnung (7) und zum Rohrgehäuse (5) passenden Rohrabschnitt (14) aufweist und über den Montierflansch (17) gegen einen an der Fangschaufel (4) angeformten Außenflansch (9) und/oder das Fallrohr (1) spannbar ist.

7. Regenwasser-Fangsystem nach Anspruch 6, **dadurch gekennzeichnet, dass** das wenigstens ein durch den Außenflansch (9) in das Fallrohr (1) einbringbares Befestigungselement zwei relativ zur Achse (8) im Wesentlichen diametral gegenüberliegende Spannschrauben (19) umfasst, die, vorzugsweise, in in den Außenflansch (9) eindringenden Fassungen (18) des Montierflansches (17) sitzen.

8. Regenwasser-Fangsystem nach Anspruch 6, **dadurch gekennzeichnet, dass** der Außenflansch (9) für ein rundes Fallrohr (1) eine konkav gerundete oder für ein Vierkant-Fallrohr (1) eine ebene Fallrohr-Anlagefläche (10) aufweist und über einen in die Einsetzbohrung (2) des Fallrohres (1) passenden Halsbereich (39) und, vorzugsweise, einen Vertikalsteg (38), mit der Fangschaufel (4) verbunden ist.

9. Regenwasser-Fangsystem nach Anspruch 4, **dadurch gekennzeichnet, dass** die Gegenraste (42) des Rohrgehäuses (5) innere, nur teilumfängliche, Rastnasen (42a) mit einem Sägezahnprofil umfasst, vorzugsweise drei entlang des Umfangs verteilte Rastnasen (42a).

10. Regenwasser-Fangsystem nach Anspruch 6, **dadurch gekennzeichnet, dass** der Montierflansch (17) eine axiale Stützschulter (20) für ein Rohrgehäuseende aufweist.

11. Regenwasser-Fangsystem nach Anspruch 5, **dadurch gekennzeichnet, dass** im Innenrohr (20) ein Dosiertopf (24) mit einer seitlichen, auf die Dosieröffnung (23) des Innenrohres (20) ausrichtbaren Wandöffnung (27) verdrehbar angeordnet ist.

12. Regenwasser-Fangsystem nach Anspruch 11, **dadurch gekennzeichnet, dass** der Dosiertopf (24) mit seinem Bodenende (26) aus dem Innenrohr (20) vorsteht und dort einen verdrehfest aufgeklipsten Drehknopf (28) trägt.

13. Regenwasser-Fangsystem nach Anspruch 12, **dadurch gekennzeichnet, dass** der Drehknopf (28) eine außenseitige Markierung (32), vorzugsweise einen Richtungspfeil, aufweist, die die Position der Wandöffnung (27) im Dosiertopf (24) repräsentiert.

14. Regenwasser-Fangsystem nach wenigstens einem der vorhergehenden Ansprüche, **dadurch gekennzeichnet, dass** die Fangschaufel (4) aus weichelastischem und die weiteren Komponenten des Regenwasserfängers (R) aus Hart-Kunststoff bestehen, und, vorzugsweise, Spritzgussteile sind.

## Claims

1. Rainwater collecting system (F), consisting of a downpipe (1) having a sideward insertion bore (2) and a rainwater collector (R) mounted with a fastening system (S) in the sideward insertion bore (2), the rainwater collector (R) comprising a collecting scoop (4) placed inside the downpipe (1) in a substantially horizontal collecting position and occupying a part of the inner cross section of the downpipe (1), the collecting scoop (4) being made from resiliently returning deformable material which can be deformed when inserting the collecting scoop (4) through the insertion bore (2), the collecting scoop (4) having a discharge opening (7) and a tube housing (5) prolongating the discharge opening (7) and being structurally separated from the collecting scoop (4), the tube housing (5) having a discharge tube (6) outside the downpipe (1), the tube housing (5) being secured at the downpipe (1) via the collecting scoop (4), **characterized in that** the discharge tube (6) is oriented crosswise to the discharge opening (7) of the tube housing (5), and that the tube housing (5) and the discharge tube (6) are rotatable substantially about the axis (8) of the discharge opening (7) and relative to the collecting scoop (4), in mounted condition of the rainwater collector (R).

2. Rainwater collecting system (F) according to claim 1, **characterized in that** the tube housing (5) is rotatable about at least about 180°, preferably about 360°.

3. Rainwater collecting system (F) according to claim 1, **characterized in that** the tube housing (5) is selectably combinable with a collecting scoop (4) having two ark-shaped fork tines (33) for round downpipes (1) or with a substantially square collecting scoop (4) for square downpipes (1).

4. Rainwater collecting system (F) according to claim 1, **characterized in that** the tube housing (5) is connected to the collecting scoop (4) via a tucked-together ratching connection (13) with a tucking direction substantially in the direction of the axis (8), preferably, via a tube adaptor (12) of the fastening system (S), the tube adaptor (12) being connectable rotation-safe with the collecting scoop (4), preferably as well with the downpipe (1) and including at the periphery a ratching teeth arrangement (16) for coaction with at least one counter ratch (42) of the tube housing (5), the counter ratch (42) extending at least along a part of the periphery.

5. Rainwater collecting system (F) according to claim 4, **characterized in that** the ratching connection (13) is additionally stabilized by an inner tube (20) of the tube housing (5), the inner tube (20) being arranged in the interior, preferably in sealed fashion and communicating with the discharge tube (6) via a sideward dosing opening (23).

6. Rainwater collecting system (F) according to at least one of the preceding claims, **characterized in that** a tube adaptor (12) is provided between the collecting scoop (4) and the tube housing (5), the tube adaptor (12) comprising a tube section (14) within a mounting flange (17) fitting both into the discharge opening (7) and to the tube housing (5), the tube adaptor (12) being adapted to be spanned via the mounting flange (17) against an outer flange (9) formed at the collecting scoop (4), and/or against the downpipe (1).

7. Rainwater collecting system (F) according to claim 6, **characterized in that** at least one fastening element which can be inserted through the outer flange (9) into the downpipe (1) includes two tensioning screws (19) which are substantially diametrically opposite relative to the axis (8), the tensioning screws (19), preferably, being seated in sockets (18) entering the outer flange (9).

8. Rainwater collecting system (F) according to claim 6, **characterized in that** the outer flange (9) either has a concavely rounded downpipe contacting surface (10) for a round downpipe (1) or a planar contacting surface (10) for a square downpipe (1), and that the outer flange (9) is connected with the collecting scoop (4) via a neck portion (39) fitting into the insertion bore (2) of the downpipe (1) and, preferably, via a vertical web (38).

9. Rainwater collecting system (F) according to claim 4, **characterized in that** the counter ratch (42) of the tube housing (5) comprises inner ratching noses (42a) defining a saw teethed profile and only extending over a part of the periphery, preferably comprises three ratching noses (42a) distributed along the circumference.

10. Rainwater collecting system (F) according to claim 6, **characterized in that** the mounting flange (17) has an axial supporting shoulder (20) for one end of the tube housing.

11. Rainwater collecting system (F) according to claim 5, **characterized in that** a dosing pot (24) is rotatably arranged within the inner tube (20), the dosing pot (24) having a sideward wall opening (27) which can be registered variably with the dosing opening (23) of the inner tube (20).

12. Rainwater collecting system (F) according to claim 11, **characterized in that** the dosing pot (24) protrudes with its bottom end (26) from the inner tube (20) and carries at this location a turning knob (28) which is clipped on such that it is secured against rotation thereon.

13. Rainwater collecting system (F) according to claim 12, **characterized in that** the turning knob (28) comprises a marking (32) at the outer side, preferably a directional arrow, representing the position of the wall opening (27) in the dosing pot (24).

14. Rainwater collecting system (F) according to at least one of the preceding claims, **characterized in that** the collecting scoop (4) consists of soft elastic plastic material and that the further components of the rainwater collector (R) consist of hard plastic material, and, preferably, all are injection molded parts.

## Revendications

1. Système de collecte d'eau de pluie (F) constitué d'un tube de chute (1) présentant un alésage d'insertion (2), et d'un collecteur d'eau de pluie (R) monté dans l'alésage d'insertion (2) à l'aide d'un système de fixation (S) et comportant une coupelle de collecte (4), qui est placée à l'intérieur du tube de chute (1), dans une position de collecte sensiblement horizontale, et occupe une partie de la section transversale intérieure du tube de chute, et qui est réalisée en un matériau élastiquement déformable en rappel pour l'introduction à travers l'alésage d'insertion (2) et présente une ouverture d'écoulement (7), le collecteur d'eau de pluie comportant également, à l'extérieur du tube de chute (1), un boitier tubulaire (5), qui prolonge l'ouverture d'écoulement (7) et forme une pièce de construction séparée de la coupelle de collecte (4), et qui comporte un embout d'écoulement (6), le boitier tubulaire (5) étant fixé au tube de chute (1) par l'intermédiaire de la coupelle de collecte (4),
**caractérisé en ce que** l'embout d'écoulement (6) est orienté sur le boitier tubulaire (5) de manière transversale à l'ouverture d'écoulement (7), et **en ce que** le boitier tubulaire (5) peut, dans l'état monté du collecteur d'eau de pluie (R), tourner, avec l'embout d'écoulement (6), par rapport à la coupelle de collecte (4), sensiblement autour de l'axe (8) de l'ouverture d'écoulement (7).

2. Système de collecte d'eau de pluie selon la revendication 1, **caractérisé en ce que** le boitier tubulaire (5) peut tourner d'au moins 180°, de préférence de 360°.

3. Système de collecte d'eau de pluie selon la revendication 1, **caractérisé en ce que** le boitier tubulaire (5) peut être combiné sélectivement avec une coupelle de collecte (4) destinée à des tubes de chute (1) de forme ronde et comportant deux dents de fourche (33) en forme d'arc, ou bien avec une coupelle de collecte (4) approximativement carrée pour des tubes de chute (1) de forme carrée.

4. Système de collecte d'eau de pluie selon la revendication 1, **caractérisé en ce que** le boitier tubulaire (5) est relié à la coupelle de collecte (4) par l'intermédiaire d'une liaison à encliquetage enfichable (13) présentant une direction de liaison enfichable orientée sensiblement dans la direction de l'axe (8), de préférence par l'intermédiaire d'un adaptateur tubulaire (12) du système de fixation (S), qui peut être relié par une liaison fixe de rotation à la coupelle de collecte (4), de préférence également avec le tube de chute (1), et présente un agencement périphérique de dents d'encliquetage (16) pour au moins un agencement d'encliquetage conjugué (42) au moins partiellement périphérique du boitier tubulaire (5).

5. Système de collecte d'eau de pluie selon la revendication 4, **caractérisé en ce que** la liaison à encliquetage (13) est stabilisée en supplément par un tube intérieur (20) du boitier tubulaire (5), qui est inséré à l'intérieur, qui est de préférence étanche et communique avec l'embout d'écoulement (6) par l'intermédiaire d'une ouverture de dosage latérale (23).

6. Système de collecte d'eau de pluie selon l'une au moins des revendications précédentes, **caractérisé en ce qu'**entre la coupelle de collecte (4) et le boitier tubulaire (5), il est prévu un adaptateur tubulaire (12), qui présente, dans un flasque de montage (17), un tronçon tubulaire (14) adapté à l'intérieur de l'ouverture d'écoulement (7) et du boitier tubulaire (5), et qui peut être serré, par l'intermédiaire du flasque de montage (17), contre un flasque extérieur (9) formé sur la coupelle de collecte (4) et/ou le tube de chute (1).

7. Système de collecte d'eau de pluie selon la revendication 6, **caractérisé en ce que** ledit au moins un élément de fixation pouvant être introduit dans le tube de chute (1) à travers le flasque extérieur (9), comprend deux vis de serrage (19) environ diamétralement opposées par rapport à l'axe (8) et logées dans des douilles (18) du flasque de montage (17), qui pénètrent dans le flasque extérieur (9).

8. Système de collecte d'eau de pluie selon la revendication 6, **caractérisé en ce que** le flasque extérieur (9) présente une surface d'appui de tube de chute (10) arrondie de manière concave pour un tube de chute (1) de section ronde, ou bien plane pour un tube de chute (1) de section carrée, et est relié à la coupelle de collecte (4) par l'intermédiaire d'une zone de col (39) adaptée à l'intérieur de l'alésage d'insertion (2) du tube de chute (1) et, de préférence, d'une nervure verticale (38).

9. Système de collecte d'eau de pluie selon la revendication 4, **caractérisé en ce que** l'agencement d'encliquetage conjugué (42) du boitier tubulaire (5) comprend des talons d'encliquetage (42a) intérieurs, uniquement partiellement périphériques, avec un profil en dent de scie, de préférence trois talons d'encliquetage (42a) répartis le long de la périphérie.

10. Système de collecte d'eau de pluie selon la revendication 6, **caractérisé en ce que** le flasque de montage (17) présente un épaulement d'appui axial (20) pour une extrémité de boitier tubulaire.

11. Système de collecte d'eau de pluie selon la revendication 5, **caractérisé en ce que** dans le tube intérieur (20) est agencé de manière rotative, un pot de dosage (24) avec une ouverture de paroi latérale (27) pouvant être orientée de manière à être en correspondance avec l'ouverture de dosage (23) du tube intérieur (20).

12. Système de collecte d'eau de pluie selon la revendication 11, **caractérisé en ce que** le pot de dosage (24) fait saillie du tube intérieur (20), avec son extrémité de fond (26), et porte ici un bouton tournant (28) qui y est enclenché en y étant lié de manière fixe en rotation.

13. Système de collecte d'eau de pluie selon la revendication 12, **caractérisé en ce que** le bouton tournant (28) présente sur le côté extérieur, une marque (32), de préférence une flèche de direction, qui représente la position de l'ouverture de paroi (27) dans le pot de dosage (24).

14. Système de collecte d'eau de pluie selon l'une au moins des revendications précédentes, **caractérisé en ce que** la coupelle de collecte (4) est réalisée en une matière plastique souple, et les autres composants du collecteur d'eau de pluie (R) en une matière plastique dure, et sont de préférence des pièces moulées par injection.
